# EUROPEAN PATENT APPLICATION

(11) **EP 1 596 090 A1**
(43) Date of publication of application: **16.11.2005**
(21) Application number: 05252973.2
(22) Date of filing: 13.05.2005
(51) Int. Cl.: F16D 65/14

(54) **Parking brake assembly**

(30) Priority: 14.05.2004 GB 0410838
(71) Applicant: Meritor Heavy Vehicle Braking Systems (UK) Limited, Cwmbran, Gwent NP44 3XU (GB)
(72) Inventor: Morris, Royston Leonard, Newport NP10 0DN (GB); Taylor, Martin Pors, Cwmbran Torfaen NP44 3ND (GB); Clarke, Lester, Oxon OX25 6HU (GB); Breakwell, Norman, Cwmbran Torfaen NP44 3JY South Wales (GB); Kinder, Adrian R., Newport N19 7QP South Wales (GB)
(74) Representative: Jones, John Bryn

(57) **Abstract**

A parking brake assembly for an air actuated disc brake (8) including a pneumatic actuator (15) having a push rod (11) for applying a brake force to brake pads, the push rod being generally translatable between a rest position at which the brake force is not applied and an actuated position at which a brake force is applied, the parking brake assembly including a clamp assembly operable to retain the push rod in the actuated position and thereby apply the parking brake, the clamp assembly being configured for fitment within a caliper housing (16) of the brake.

## Description

The present invention relates to a parking brake assembly. More particularly, the present invention relates to a parking brake assembly for an air actuated disc brake.

Air actuated disc brakes are typically used in heavy vehicle applications, such as for the braking of trucks or buses. Such brakes typically operate as follows:

Pressurised air is introduced behind a diaphragm of an air chamber, which generates a load in a push rod. The push rod in turn applies a force to a pivotably mounted operating shaft, causing it to rotate. By means of an eccentric action, an amplified force is applied to one or more adjustable tappet assemblies that advance a brake pad towards a brake rotor, causing a clamping effect on the brake rotor, thereby retarding rotation of the rotor due to friction generated between the pad in contact with the tappet, and a further brake pad mounted on the opposite face of the rotor.

To comply with safety legislation, when a vehicle fitted with air actuated brakes is parked, the brakes must be applied mechanically without reliance on the pressurised air, in order to overcome the risk of the brake force being removed due to accidental leakage of the air, with obvious consequences.

Conventionally, in air actuated brakes of the type described above, this parking brake function is achieved by the addition of a large spring to the rear of the air chamber to generate a load on the push rod when no pressurised air is present.

The addition of this spring, together with an additional air chamber required to release the parking brake, that is mounted behind the air chamber for the application of service brakes, adds to the bulk, weight and expense of the vehicle braking system.

The present invention seeks to overcome, or at least mitigate the problems of the prior art.

Thus according to the present invention there is provided a parking brake assembly for an air actuated disc brake including a pneumatic actuator having a push rod for applying a brake force to brake pads, the push rod being generally translatable between a rest position at which the brake force is not applied and an actuated position at which a brake force is applied. The parking brake assembly includes a clamp assembly operable to retain the push rod in the actuated position and thereby apply the parking brake. The clamp assembly is configured for fitment within a caliper housing of the brake.

The invention will now be described, by way of example only, with reference to the accompanying drawings in which:-
Figure 1 shows a cross section of a vehicle brake according to the present invention in an unactuated, or brakes off position,
Figure 2 shows vehicle brake of figure 1 with the parking brake applied,
Figure 3 shows an isometric view of certain parts of the vehicle brake of figure 1,
Figure 4 shows a view of figure 3 taken in the direction of arrow A,
Figure 5 shows an enlarged cross section view of the collet of figure 2 in isolation,
Figure 6 shows an enlarged view of part of figure 1,
Figure 7 shows a second embodiment of a clamp arrangement for a parking brake according to the present invention,
Figure 8 shows a third embodiment of a clamp arrangement for a parking brake according to the present invention, and
Figures 9 and 10 are further isometric views of certain parts of the vehicle brake of figure 1

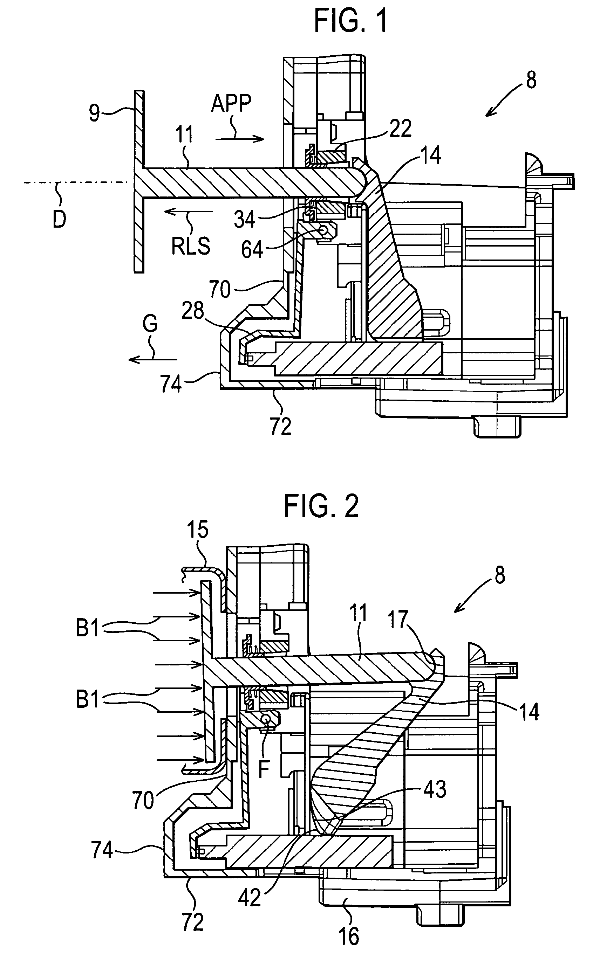

Figures 1 to 6 show parts of a brake 8 which is operable in a service mode, i.e. is operable to retard the associated vehicle when said vehicle is being used on public highways etc. The brake can also be operated as a parking brake, i.e. the parking brake can be applied and the vehicle operator can then leave the vehicle.

Service operation of the brake 8 is conventional and well known. However, in summary brake 8 is of the type comprising a caliper housing that straddles a disc or rotor (not shown). The caliper is typically mounted on an axle of the vehicle to be braked (not shown) and is slideable longitudinally relative to the axle. The rotor is mounted for rotation together with a wheel of the vehicle. The brake 8 is actuated by the introduction of pressurised air (represented by arrows B1) behind a diaphragm (9) of air chamber 15 (only shown on figure 2). The diaphragm (which will include sealing features (not shown) sealing between the diaphragm and the air chamber 15) is connected to a push rod 11 that co-operates with a socket 17 at the radially outer end of an operating shaft or "op-shaft" 14 of the brake. The operating shaft is generally "T" shaped. The lower end (when viewing figure 1) of the op-shaft 14 has at its opposite ends arcuate bearing surfaces 42 seated in bearing seats 43 arranged at the lower end of an inner housing part 16 of the caliper to permit the op-shaft 14 to rotate about an axis. The lower end of the op-shaft 14 is further provided with pockets (not shown) positioned eccentric to the op-shaft axis of rotation which, upon rotation, cause a force to be transmitted to a pair of spaced adjustable tappet assemblies. These tappet assemblies apply the input load from the actuator to the rear face of an inner brake pad (not shown), thus pressing the friction material of the brake pad into frictional engagement with the rotor.

A reaction force is generated through this frictional engagement between the rotor and the inner brake pad, that is fed back through the tappet assemblies 22 and op-shaft 14, that is supported by the inner housing part 16. The inner housing part 16 is secured to an outer housing part (not shown). Thus, the applied force being generated by movement of the op-shaft 14 is ultimately transmitted by reaction means to the outer housing part, which in turn presses an outer brake pad (not shown) into frictional engagement with the rotor. Therefore, the rotor, upon movement of the op-shaft 14 in an application direction APP (see figure 1), is clamped between the inner and outer brake pads to generate a braking force for service braking the vehicle under control of the applied input movement from push rod 11. Release of air pressure from the air chamber will cause the push rod to move in a release direction RLS (see figure 1) under the action of a return spring (not shown).

The tappet assemblies are adjustable to compensate for wear of the friction material of the brake pads.

For a further explanation of the service operation of brake 8, the reader is referred to US6435319, which shows a similar brake, and the service operation thereof.

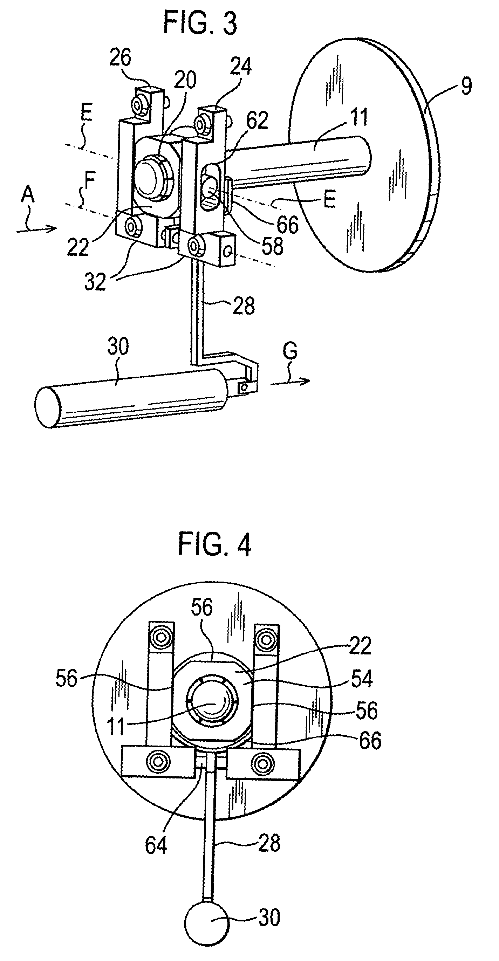

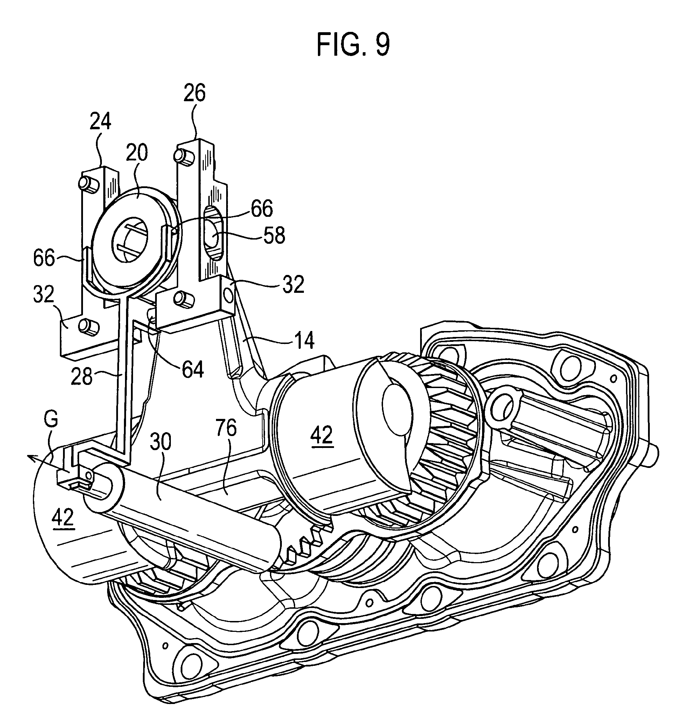

As mentioned above, brake 8 can also be used as a parking brake, and figures 3 and 9 show the major components of the parking brake assembly. Except for the push rod 11 and diaphragm 9, all other components shown in figure 3 are primarily aimed at providing a parking brake function. These components are a collet 20 (also known as a wedgeable element), a clamp housing 22, a clamp housing mount 24 and 26, a release lever 28, a release actuator 30, a release lever pivot mount 32 and a spring 34 (best seen in figure 1).

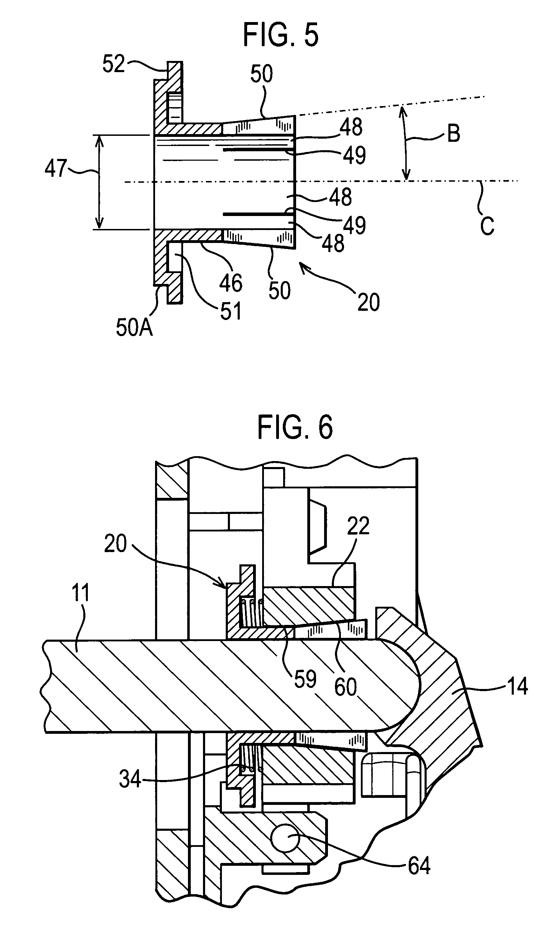

Collet 20 (best seen in figure 5) has a generally cylindrical body portion 46. Projections 48 (in this case 6 in total) depend from the body portion 46. Body portion 46 and projections 48 have a common internal diameter 47. Each projection is separated from the adjacent projection by a slit 49. Each projection includes a radially outer wedge surface 50 which is orientated at an angle B (in this case approximately 6 degrees) relative to an axis C of the body portion 46. The slits 49 allow each projection 48 to move radially inwardly to frictionally engage the push rod as will be further described below. A stepped flange 50A projects generally radially from an end of the body portion 46 remote from the projections 48. Stepped flange 50A includes a recess 51 and a release surface 52. Collet 20 is slideably mounted on push rod 11 such that axis C is substantially coincident with axis D of push rod 11.

Clamp housing 22 has a generally cylindrical body 54 having four "flats" 56. Projecting from two opposing flats are cylindrical bosses 58 (also known as lugs). The inner bore 59 of body 54 is machined with a profile that compliments the radially outer profile of the cylindrical body portion 46 and the wedge surface 50. In particular, region 60 of inner bore 59 is conical and is angled relative to an axis of inner bore 59 at an angle equivalent to angle B.

As is best seen in figure 6, when assembled, region 60 faces wedge surface 50.

Mounted in recess 51 is a spring 34 which acts on and biases collet 20 to the left when viewing figure 6, and reacts against the clamp housing 22.

The spring force is sufficient to move the collet to the left relative to the clamp housing thereby wedging the projections 48 between region 60 of the clamp housing and the push rod when the parking brake is applied, as will be further described below.

Thus, it will be appreciated that the collet 20 and clamp housing 22 together provide a clamp assembly.

Clamp housing mounts 24 and 26 are secured to the housing part 16 and each includes a slot 62 within which a corresponding cylindrical boss 58 sits. The slots 62 allow vertical movement (when considering figure 3 i.e. movement in a lateral direction of the push rod) of the cylindrical bosses 58, and hence the clamp housing 22 but prevent axial movement (when considering the axis of push rod 11) of clamp housing 22.

As is best seen in figure 4, two flats 56 sit snugly between the clamp housing mounts 24 and 26. The interaction between these flats and the inner surfaces of the clamp housing mounts 24 and 26 prevent rotation of the clamp housing 22 in a clockwise or anticlockwise direction when viewing figure 4. The cylindrical bosses 58 have an axis E and thus the clamp housing can rotate about axis E during operation of the brake. As will be appreciated from figure 1 and 2, socket 17 moves in an arc as the operating shaft 14 rotates during brake operation. However, the diaphragm 9 moves substantially in a straight line. Thus, as the brake moves from the position shown in figure 1 to the position shown in figure 2, the collet 20 is initially raised and then lowered, and furthermore is caused to tip about axis E. This raising and lowering is accommodated by slot 62 (as mentioned above), and the tipping is accommodated by the slight rotation of the clamp housing about the external surface of the cylindrical bosses 58.

Release lever 28 is pivotally mounted via pin 64 about pivot axis F. Opposing end of pin 64 are secured in corresponding release lever pivot mounts 32. The upper end of release lever 28 is forked and includes fork tines 66 (only one of which is shown in figure 3) on either side of the push rod. The ends of the fork tines 66 engage an adjacent region of the release surface 52. The lower portion of the release lever 28 is connected to a release actuator 30. In this case the release actuator 30 is an air operable actuator in which air is supplied to power the actuator to an actuated condition. To return the air actuator to a rest condition, air is vented and an internal return spring (not shown) returns the actuator to the rest condition. It will be appreciated that alternative actuators could be used, such as air motors, electric motors or linear electric actuators.

Operation of the release actuator 30 causes the lower end of the release lever 28 to move in the direction of arrow G (see figures 1, 3 and 9) thereby causing the fork tines 66 to move the collet 20 to the right when viewing figure 1.

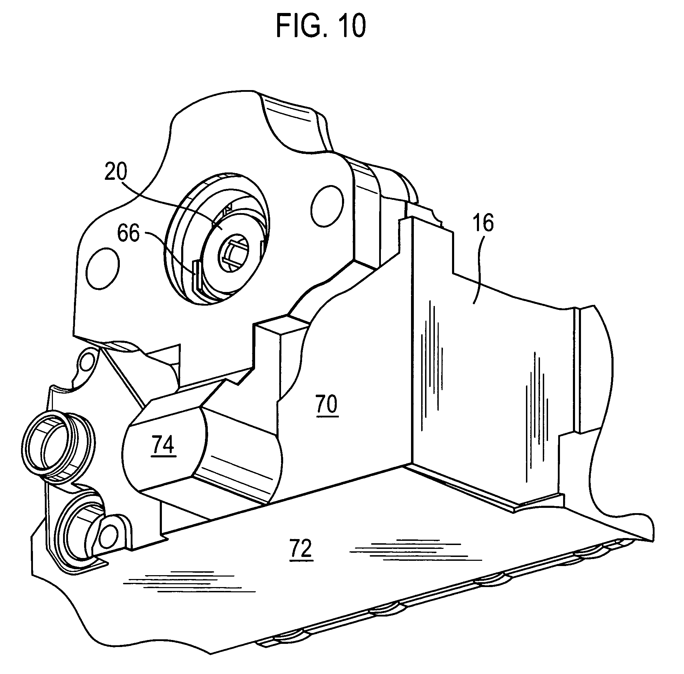

As can be seen from figures 1, 2, 9 and 10, the release actuator 30 is located proximate rear 70 and base 72 walls of the caliper housing 16, substantially in alignment with a vertical centreline of the caliper, directly beneath pushrod 11. In order to accommodate the release actuator 30 within the housing 16, a projection 74 is provided in a lower portion of the rear face 70, where it does not interfere with the positioning of air chamber 15 above the projection on the rear face.

Furthermore, as is most apparent from figures 1, 2 and 9, this positioning of the release actuator 30 enables it to extend under the op-shaft 14 in a recess 76 between arcuate bearing surfaces 42, thereby optimising the packaging of the release actuator 30 within the brake.

As previously mentioned, brake 8 can be operated in a service mode, or in a parking brake mode. When operated in a service mode, clearly the parking brake is not applied. Under these circumstances, the release actuator 30 is powered to an actuated condition to move the lower end of release lever 28 to the left when viewing figure 1. This in turn causes the fork tines 66 to move the collet 20 to the right when viewing figure 1 thereby ensuring that there is no wedging action between the collet, the push rod and the clamp housing. As such, the push rod is free to slide within the collet. Thus, when it is required to apply the service brake, air is admitted into the chamber 15 thereby forcing the diaphragm and push rod to the right in an application direction APP causing the operating shaft 14 to rotate and apply the brake. When the air is released from chamber 15, the brake is free to return to the position shown in figure 1. In particular, the clamp arrangement does not restrict movement of the push rod in the release direction RLS.

When it is required to apply the parking brake, the release actuator 30 is deactivated, i.e. air is vented from the actuator thereby allowing the lower portion of the release lever 28 to move to the right when viewing figure 2 and hence the fork tines will move to the left when viewing figure 2. This in turn allows the spring 34 to force the collet to the left when viewing figure 2. However such leftward movement of the collet is limited as the projections 48 are progressively wedged between region 60 and the push rod thereby clamping the push rod.

It will be appreciated that such a wedging action prevents the push rod moving to the left when viewing figure 2. Thus, one method of applying the parking brake is to initially apply the service brake to pressurise chamber 15 such that the operation shaft 14 rotates and the brake is applied. The release actuator can then be deactivated causing the collet to wedge between the clamp housing and the push rod. Upon subsequent release of the service brake, air pressure B 1 will be released, but the push rod will remain in the position shown in figure 2 by virtue of it being clamped by the collet and clamp housing.

It will also be appreciated that the wedging action of the collet is such as to prevent the push rod moving to the left (in the release direction RLS) as shown in figure 2, but does not prevent the push rod moving to the right (in the application direction APP) as shown in figure 2.

Thus, an alternative way of applying the parking brake is, starting from a position shown in figure 1, to initially deactivate the release actuator thereby causing the collet to wedge onto the push rod with the brakes in the off condition. Subsequent application of the service brake will cause the push rod to move to the right (in the application direction APP) since the wedging action will be ineffective when the push rod moves in this direction. However, once the service brake has been applied to apply the brakes, the push rod will not move to the left (in the release direction RLS) when the service brake is released, since it will be held in position by the clamp arrangement, since the wedging action is effective when the push rod attempts to move to the left. As will be appreciated, once the release actuator has been deactivated, the clamp arrangement is self engaging and self clamps the push rod to apply the parking brake.

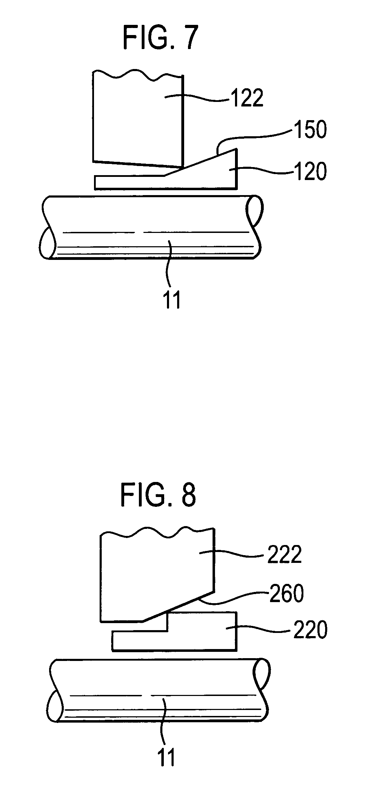

As mentioned above, the collet 20 has a radially outer wedge surface 50 (a wedgeable element wedge surface) which engages with region 60 (a clamp housing wedge surface) of the clamp housing. In further embodiments it is possible to provide a wedging action by having a wedge surface on just the collet, and without having a wedge surface on the clamp housing. See in particular figure 7 which shows a part cross section view of a clamp arrangement having a wedgeable element 120 with a wedge surface 150 similar to wedge surface 50, but which has a clamp housing 122 that does not have a wedge surface equivalent to region 60 of clamp housing 22. In a yet further alternative embodiment, it is also possible to apply a wedging action by having a wedging surface on just the clamp housing, without having a wedging surface on the collet. See in particular figure 8 which is a part cross section view of a clamp arrangement having a clamp housing 222 with a wedged surface 260 equivalent to region 60, but which has a wedgeable element 220 which does not include a wedge surface equivalent to wedge surface 50 of collet 20. For this reason the term wedgeable element as used in the present application is not restricted to an element having a wedge surface, rather it refers to the ability of the element to be wedged. Thus it will be appreciated that using this definition item 220 is a wedgeable element even though it does not include a wedge shaped surface.

## Claims

1. A parking brake assembly for an air actuated disc brake (8) including a pneumatic actuator (15) having a push rod (11) for applying a brake force to brake pads, the push rod being generally translatable between a rest position at which the brake force is not applied and an actuated position at which a brake force is applied, the parking brake assembly including a clamp assembly operable to retain the push rod in the actuated position and thereby apply the parking brake, the clamp assembly being configured for fitment within a caliper housing (16) of the brake.

2. A parking brake assembly as defined in claim 1 in which the clamp assembly self clamps the push rod when the push rod is moved to the actuated position to apply the parking brake.

3. A parking brake assembly as defined in claim 1 or 2 in which the clamp assembly includes a clamp housing (22) substantially fixed in an axial direction of the push rod relative to the parking brake assembly and a wedgeable element (20) operable to retain the push rod in the actuated position by a wedging action with the clamp housing and the push rod, preferably in which the clamp housing has a clamp housing wedge surface (60) engageable by the wedgeable element to create the wedging action.

4. A parking brake assembly as defined in claim 3 in which the clamp housing (22) includes a bearing surface operable to allow the clamp housing to move generally in a lateral direction of the push rod as the push rod moves in said lateral direction during operation, preferably in which said bearing surface is provided on lugs (58) of the clamp housing.

5. A parking brake assembly as defined in any one of claims 3 to 4 in which the clamp housing includes a pivot arrangement operable to allow the clamp housing to pivot as the push rod pivots during operation.

6. A parking brake assembly as defined in claim 5 when dependent upon claim 4 in which the pivot arrangement is provided by the lugs.

7. A parking brake assembly as defined in any one of claims 3 to 6 in which the wedgeable element has a wedgeable element wedge surface engageable by the clamp housing to create the wedging action, preferably in which the wedgeable element wedge surface is provided on a plurality of resiliently mounted projections (48) preferably 4 or 6 or 8 projections.

8. A parking brake assembly as defined in claim 3 further comprising a power actuator operable to release the clamp assembly and thereby release the parking brake, in which the power actuator acts to move the wedgeable element to a non wedging position and thereby release the parking brake, preferably in which the power actuator (30) acts to move the wedgeable element in an application direction of the push rod to the non wedging position.

9. A parking brake assembly as defined in claim 8 in which the power actuator acts via a pivotable lever (28) to release the parking brake.

10. A parking brake assembly according to any preceding claim, further comprising a caliper housing (16), the clamp assembly being located within the caliper housing, preferably wherein a portion of the clamp assembly is located within a wall (70) of the caliper housing.

11. A parking brake assembly according to claim 10 wherein the portion of the clamp assembly is located proximate an opening in the housing to receive the push rod.

12. A parking brake assembly according to any one of claims 10 to 11 further comprising a power actuator operable to release the clamp assembly and thereby release the parking brake, the power actuator being located within the caliper housing.

13. A parking brake assembly according to claim 12 wherein the power actuator is located proximate a rear wall (70) and base wall (72) of the housing.

14. A parking brake assembly according to claim 12 or 13 wherein the power actuator is located substantially along a centreline of the housing in alignment with the line of action of the push rod.

15. A parking brake assembly according to claim 13 or 14 wherein the rear housing wall comprises a projection (74) extending rearwardly so as to accommodate the power actuator.
